(19) Europäisches Patentamt
European Patent Office
Office européen des brevets

(11) **EP 3 693 714 A1**

(12) **EUROPEAN PATENT APPLICATION**

(43) Date of publication:
**12.08.2020 Bulletin 2020/33**

(51) Int Cl.:
**G01K 3/04** (2006.01)  **G01K 5/48** (2006.01)
**G01K 11/16** (2006.01)

(21) Application number: **20154919.3**

(22) Date of filing: **31.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.02.2019 EP 19156531**

(71) Applicant: **Fresh Strips B.V.**
**5656 AE Eindhoven (NL)**

(72) Inventors:
• **NICKMANS, Koen**
**5631 MD Eindhoven (NL)**
• **VAN DER HEIJDEN, Danielle Anna Catharina**
**5708 AG Helmond (NL)**

(74) Representative: **CPW GmbH**
**Kasinostraße 19-21**
**42103 Wuppertal (DE)**

(54) **OPTICAL SENSOR BASED ON SHAPE MEMORY BETWEEN SCATTERING AND TRANSPARENT MODES**

(57)    A composite comprising an upper layer and a substrate layer, wherein the upper layer comprises a shape-memory polymeric material having a glass transition temperature $T_{g,SMP}$ and being at least partially transparent for light in the VIS-range, characterized in that the upper layer comprises a surface, wherein the surface is at least partially a rough surface having an arithmetic average roughness $R_a$ of at least 0.1 $\mu$m.

Figure 2

b)

## Description

The invention pertains to a composite, a method of manufacturing such a composite and the use of such a composite.

In logistics, e.g. transport and storage, numerous goods demand cooling to be protected against spoiling, aging and/or decomposition. The needed temperature in the cooling is substantially depending on the transported good. Frozen food needs a temperature of -18 °C or lower, fresh meet demands at most 4 °C, milk and milk products have to be stored at 4 to 8 °C and chocolate demands a temperature of about 15 to 18 °C.

Also several medical goods such as vaccines, blood bags, infusions, bacterial cultures or pharmaceuticals demand cooling, as well as chemical reagents.

Therefore, in logistics a cold chain was established to guarantee that the temperature sensitive goods are cooled at the demanded temperature during the whole logistical process.

To guarantee that the cold chain has not been broken, the temperature has to be monitored permanently.

For monitoring the temperature, a variety of electronical sensors are on the market, which can serve as time-temperature integrators. These electronical sensors typically cost more than 1 €/sensor and are far too expensive for broad application, such as on packaging of food, medicine and/or chemicals.

Also analogous organic time-temperature integrators (TTIs) are on the market, but these TTIs are generally multiple layer devices making them more expensive.

WO 2010/084010 discloses battery-free optical TTIs that comprise a coating of cholesteric liquid crystalline (CLC) polymer. The helical pitch of the cholesteric liquid crystals causes these materials to reflect a band of circularly polarized light, centered at wavelength $\lambda_0$, thereby exhibiting a structural color. When mechanical compression is performed on the coating of a CLC polymer network above its glass transition temperature ($T_g$), the cholesteric helices are compressed, thereby causing a reduction in the reflected wavelength $\lambda_1$ (where $\lambda_1 < \lambda_0$), and hence inducing a color change. When the polymer network is cooled during compression (below $T_g$), glass formation occurs thereby locking in the color in a temporary mode upon removing the compressive stress. Shape recovery occurs only when the deformed coating of CLC polymer network is heated above its $T_g$, which is accompanied by an irreversible optical response ($\lambda_1 \rightarrow \lambda_0$). When heated, the mechanically compressed coating of CLC polymer network can act as a time-temperature integrator (TTI), with the transition centered at the $T_g$ of the CLC polymer network. The kinetics of the shape recovery are temperature dependent, and the rate of recovery increases with increasing temperature.

WO 2018/033595 discloses a photonic time-temperature sensor consisting of a coated and embossed interpenetrating network of a CLC polymer and a secondary polymer, wherein the photonic time-temperature sensor has a broad $T_g$ range. Due to the broad $T_g$ range, the photonic time-temperature sensor changes the color at desired temperature ranges slowly and/or by small changes of color intensity of different wavelengths, which are not directly apparent to the naked eye.

US 6,671,031 discloses a method for manufacturing a polarization diffraction film comprising liquid crystal material comprising a liquid crystal polymer and a cross linkable substance. These polymers are fixed in cholesteric alignment.

In the prior art there are some difficulties to scale up the manufacturing process. In WO 2010/084010 and WO 2018/033595, compression was performed using a small spherical stamp (radius of curvature = 25.8 mm), resulting in the deformed areas being limited in area (~mm), and a color variation between the edge and the center of the deformed zone.

The unpublished international application PCT/NL2018/050741 discloses that the area limitation can be at least partially overcome by depositing the CLC composition as an array of mutually non-touching array elements. Using this approach TTIs with dimensions in the cm range where generated.

However, in order to obtain embossed areas over industrially relevant dimensions (many TTIs in parallel), an even mechanical compression is required across the width of the envisioned production line. Therefore the stamp for embossing has to be even about its whole surface, and it is further required that the coating of the CLC polymer is very even, which requires precise printing techniques.

Due to the fact that the surface of the stamp and the surface of the coating have to be as even as possible, contamination by particles, e.g. dust, complicates the manufacturing of the photonic TTI based on this mechanism.

For the embossing of CLC polymers, the required accuracy increases with decreasing layer thickness. For example, to achieve a red-green colour shift, a compression of ~15% is required, which equates to 3 $\mu$m for a 20 $\mu$m layer but only 300 nm for a 2 $\mu$m layer. Generating an even colour shift using industrial embossing equipment is therefore very difficult, since gap accuracies are typically ±1 $\mu$m.

The object of the present application is to provide a composite, which allows to overcome the drawbacks of the prior art and is able to be manufactured fast and cheap and in a commercial attractive amount.

A further object of the present application is to provide an optical sensor which comprises the composite.

The object of the present application is solved by a composite comprising an upper layer and a substrate layer, wherein the upper layer comprises a shape-memory polymeric material having a glass transition temperature $T_{g,SMP}$ and being at least partially transparent for light in the VIS-range, characterized in that the upper layer comprises a surface, wherein the surface is at least partially a rough surface having an arithmetic average roughness $R_a$ of at least 0.1 $\mu$m.

Within the scope of the invention, light in the VIS-range has to be understood as a light having a wavelength of 400 nm to 700 nm.

The arithmetic average roughness $R_a$ can be calculated by formula (1):

$$(1) \qquad R_a = \frac{1}{n}\sum_{i=1}^{n}|y_i|$$

In formula (1) $R_a$ is the arithmetic average roughness, n is the number of measurements, wherein the vertical distance y between a mean line and the surface of the upper layer is measured, according to DIN 4768/1 "Determination of Surface Roughness of Parameters $R_a$, $R_z$, and $R_{max}$ by Electrical Stylus Instruments". The mean line is calculated from the data set of measuring a rough surface, which is known to a person skilled in the art.

The effect of a rough surface of the upper layer is that the shape-memory polymeric material of the upper layer becomes at least partially opaque for the light in the VIS-range by scattering the light by the rough surface. Thus, the transmitting of light in the VIS-range through the shape-memory polymeric material of the upper layer is at least partially inhibited by the scattering of the rough surface of the upper layer.

Moreover, if the composite is exposed to a temperature which approaches the $T_{g,SMP}$ the shape-memory polymeric material can relax to its original form, e.g. an upper layer having a smooth and even surface, thus, scattering of light is reduced and the surface of the upper layer becomes at least partially transparent for light in the VIS-range.

Advantageously, by transferring the rough surface of the upper layer into a smooth and even surface by exceeding the $T_{g,SMP}$ the composite is able to show a significant optical effect, e.g. color change and/or change between a transparent and opaque surface, which is visible to the naked eye.

Surprisingly, due to the optical effect of the rough surface of the upper layer, the composite overcomes the aforementioned disadvantages. The optical effect is visible to the naked eye. Further, the rough surface can be obtained without disturbances caused by particle contamination, and the deformation can be performed over arbitrarily large areas. Thus, the composite can be manufactured fast in a commercial attractive amount at low costs.

Further, it is surprising that the optical effect of the composite is only depending on the properties of the shape-memory polymeric material of the upper layer, thus, decoupled from properties of a potential chromophoric substance, such as CLC polymeric material in the prior art. Thus, the optical effect is depending solely on the $T_{g,SMP}$ and is more easily modifiable.

In a preferred embodiment, the arithmetic average roughness $R_a$ is at least 0.2 $\mu$m, more preferably at least 0.4 $\mu$m. The arithmetic average roughness can also be indicated by ISO Grade Numbers, according to ISO 4287:1997, wherein the ISO Grade Number N3 corresponds to an $R_a$ value of 0.1 $\mu$m, N4 to an $R_a$ value of 0.2 $\mu$m and N5 to an $R_a$ value of 0.4 $\mu$m.

Without being bound to theory, it is believed that an upper layer having a rough surface with an $R_a$ value of less than 0.1 $\mu$m, the above described effect is diminished. Also without being bound to theory it is believed by having a $R_a$ value which exceeds widely the preferred ranges, the shape memory effect can be destroyed or at least disturbed by losing the reversibility of the shape memory effect.

In a further preferred embodiment of the invention, the upper layer has a thickness of at most 20.0 $\mu$m, preferably of at most 10.0 $\mu$m, more preferably of at most 6.0 $\mu$m, even more preferably of at most 4.0 $\mu$m, and most preferably of at most 2.5 $\mu$m.

The above described effects are almost independent from the thickness of the upper layer, thus, a thickness of more than 20 $\mu$m of the upper layer is possible. But, to save resources, to provide a cheap composite and for good handleability of the composite, a thickness of the upper layer of at most 20 $\mu$m is preferred.

In a preferred embodiment the $T_{g,SMP}$ is below 70 °C, preferably below 50 °C, more preferably below 30 °C, and most preferably below 20 °C.

The effect of a $T_{g,SMP}$ less than 70 °C is that the composite can show its optical effect by approacing the $T_{g,SMP}$ at temperatures, which are common in storing and logistical tasks. For further improved applications a $T_{g,SMP}$ above 70 °C or rather below 10 °C, even negative temperatures, are possible and are depending on the composition of the shape-memory polymeric material.

Accordingly, the composite can be tuned to show the optical effect at different temperatures by selecting a certain shape-memory polymeric material.

In another preferred embodiment the $T_{g,SMP}$ can be lowered by humidity and water, irradiation, organic vapors, amines, metal ions, pH-values, and chemical gases such as ammonia, carbon dioxide, carbon monoxide nitrogen dioxide, nitrogen monoxide, and oxygen.

Due to lowering the $T_{g,SMP}$ by further exposure to one or more of the above listed analytes, enables the composite to show the optical effect at the operational temperature, which is assumed constant. Accordingly, the composite can be tuned to show its optical effect by different exposure by selecting certain shape-memory polymeric materials for the upper layer, which are sensitive to one or more of the above shown exposures.

In a further preferred embodiment, the substrate layer comprises a laminate of at least two sheets.

The substrate layer may comprise any suitable material on which an upper layer can be attached, including laminates having at least two sheets.

In a preferred embodiment, at least one of the at least two sheets of the substrate layer is selected from the group comprising a glass sheet, a polymeric material sheet, a paper and/or paperboard sheet, a metal sheet, a mineral sheet, and a sheet made of ink.

The effect of different sheets in the substrate layer is that the certain sheets e.g. glass as a transparent sheet or a sheet made of ink as opaque but colored sheet, can support the optical effect of the composite. Depending on the application the optical effect can be more significant (e.g. improved contrast between two or more modes) and more visible to the naked eye, by different sheets of the substrate layer.

Within the scope of the invention, the optical effect comprises two or more modes which have, e.g. a first mode, which is an initial mode, wherein the upper layer has a flat and even surface and a second mode, which is a deformed mode, wherein the upper layer has a rough surface having an $R_a$-value of 0.1 $\mu$m or more. The optical effect can be e.g. a color change so that the first mode comprises a first color and the second mode a second color, wherein the first color and the second color are different, or a change between transparency and opaqueness.

In a preferred embodiment, the upper layer and/or at least one of the sheets of the substrate layer comprises a CLC polymeric material.

CLC polymeric material can be provided according to WO 2010/084010 A1 or WO 2018/033595 A1 and due to its cholesteric structure, the CLC polymeric material exhibits color. As also stated in WO 2018/033595 A1, by compressing the CLC polymeric material a color change can be produced.

If the CLC polymeric material is comprised in the upper layer and/or in a sheet of the substrate layer, it has the effect that by deforming (which includes embossing/ compressing the composite) the surface of the upper layer, the CLC polymeric material can undergo at least partially a color change. This could support the optical effect of the composite in terms of an improved contrast between two or more modes and an improved visibility for the naked eye. If the CLC polymeric material is located in the substrate layer, the color (i.e. light of a certain wavelength) originating from the CLC polymeric material can be transmitted through the upper layer to be visible for the naked eye. By having a rough surface, the surface scatters the transmitted color/light such as the upper layer is getting opaque and the color originating from the CLC polymer is at least partially invisible to the naked eye.

Preferably, the CLC polymeric material maybe arranged in a layer and/or a sheet comprising a polymeric material.

In a further preferred embodiment, the CLC polymeric material and the polymeric material of the upper layer and/or of a sheet of the substrate layer are an interpenetrating polymeric network.

The interpenetrating polymeric network is provided according to WO 2018/033595 and has the effect that the color change of the CLC polymeric material, which occurs due to the structural change after compressing, can be held in a compressed mode, thus, at a certain color mode.

In a further embodiment, the CLC polymeric material is arranged as an array of mutually non-touching array elements.

Preferably, the arrangement of the CLC polymeric material as an array of mutually non-touching array elements is a printed arrangement.

In an embodiment, the CLC polymeric material are CLC particles.

CLC particles are a form of CLC polymeric material and can be provided according to WO 2015/120950 A1. The CLC particles have the advantage that the color of the particles is not viewing angle dependent. Therefore, the viewing angle independency supports the optical effect of the composite in terms of an uniform color and/or uniform color change when e.g. exceeding the $T_{g,SMP}$.

In another preferred embodiment, the at least one sheet of the substrate layer can be transparent and/or can have any possible color including white and black, preferably the color is black.

The fact, that a sheet of the substrate layer is transparent, and/or has any possible color supports the optical effect of the composite in terms of improved contrast and/or uniform color change.

A composite according to the invention can also be manufactured by a method comprising the following steps:

a) providing an upper layer onto a substrate layer, wherein the upper layer comprises a shape-memory polymeric material having a $T_{g,SMP}$ and being at least partially transparent for light in the VIS-range,

b) heating the composite above $T_{g,SMP}$,

c) compressing the upper layer with a stamp having a rough surface,

d) cooling down the composite under $T_{g,SMP}$,

e) removing the stamp to provide an upper layer comprising a rough surface having an arithmetic average roughness $R_a$ of at least 0.1 $\mu$m.

Preferably, the stamp has a flexible surface. Preferably, the surface of the stamp comprises a material selected from a group comprising rubber, plastic, or paper material. The surface of the stamp may be a patterned surface or a non-patterned surface. The stamp can have any suitable shape for different processing techniques e.g. plate-to-plate, roll-to-plate and roll-to-roll processes.

In a preferred embodiment, the stamp in a roll-to-roll process is a covered steel roll, wherein the covering of the steel roll has a Youngs modulus of at most 250GPa, preferably of at most 230 GPa, more preferably of at most 210 GPa, and most preferably of at most 190 GPa according to ASTM E111.

A flexible stamp or a stamp having a flexible surface are known to a person skilled in the art. Non-limiting examples are disclosed in WO 2016/128494 and WO 2016/128493.

The composite manufactured according to the method can also comprise any of the above mentioned embodiments.

The composite according to the invention can be used as an optical sensor on substrates comprising food, medicine, chemicals, and/or any other temperature sensitive perishable goods.

The following figures and examples have to be understood as embodiments of the invention and not as limiting features of the invention.

**Figure 1:** a) Optical micrographs of a composite according to the invention in an initial and the deformed mode, and b) reflection bands of initial, deformed and heated modes.

**Figure 2:** Height profiles of the upper layer of the composite of Fig. 1 a) before deformation and b) after deformation.

**Figure 3:** Photographs of the deformed composite of Fig. 1 obtained at various viewing angles.

**Figure 4:** a) Optical micrographs of a composite according to the invention in an initial mode, a deformed mode, and a heated mode, and b) reflection bands of initial, deformed, and heated modes.

**Figure 5:** a) Optical micrographs of a composite according to the invention in an initial mode, deformed mode, and heated mode, and b) reflection bands of initial, deformed, and heated modes.

**Figure 6:** a) Optical micrographs of a composite according to the invention in an initial mode, a deformed mode, and a heated mode, and b) reflection bands of initial, deformed, and heated modes.

**Figure 7:** a) Optical micrographs of a composite in a mode before compression (initial) and after compression of the composite and b) reflection bands of initial and compressed modes.

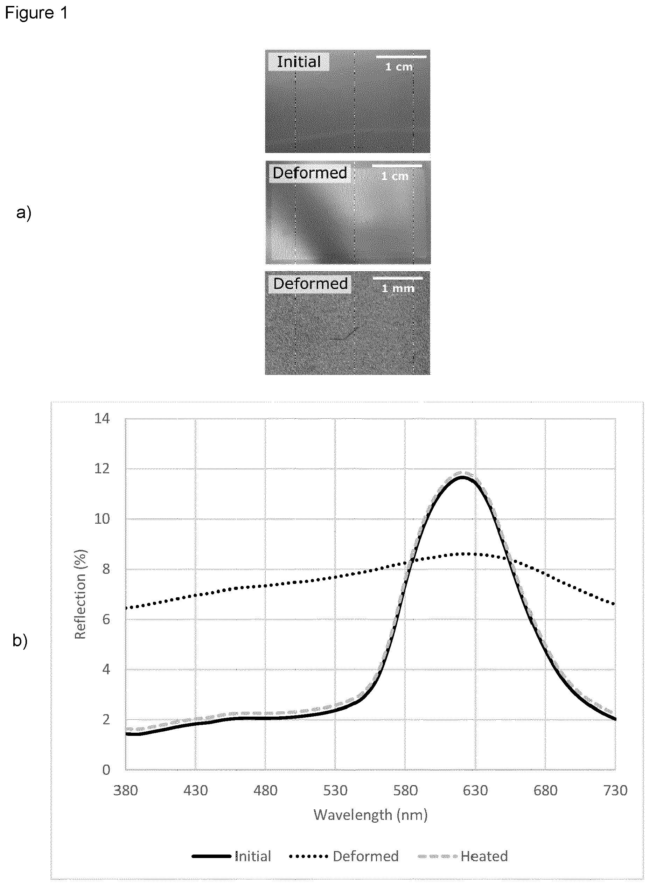

Figure 1 shows a composite according to the invention, wherein in Figure 1a optical micrographs of the composite are shown. The micrographs show the composite in an initial mode (initial), in which the upper layer has an even and uniform surface of ca. 2.5 $\mu$m thickness, and in a deformed mode (deformed), in which the upper layer has a rough surface. The shown composite comprises CLC polymeric material in the upper layer so that the composite shows a red color in the initial mode and shows a matte grey/green color in the deformed mode. The zoomed micrograph of the deformed mode shows several different colored spots, which shows the increase of light scattering. Additionally, the zoomed micrograph shows also that contamination of particles is uncomplicated as this does not disturb the scattering. Furthermore, Figure 1b shows the reflection band of the composite in the different modes, in which can be seen that after deformation the reflection bands is flattened and has an increased reflection across all wavelengths, which indicates the increased scattering.

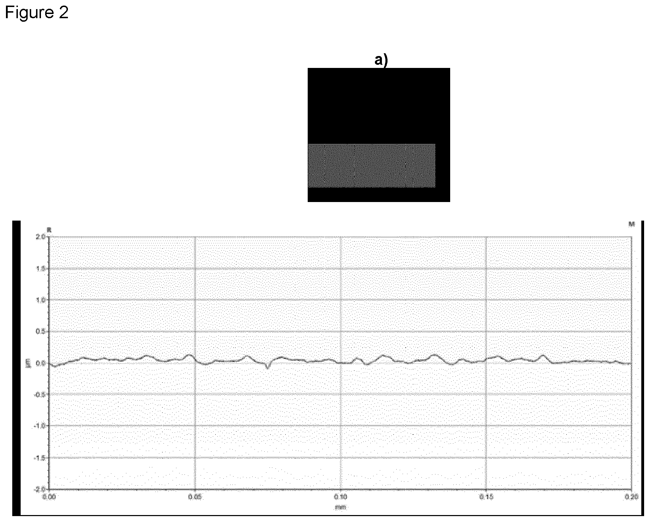

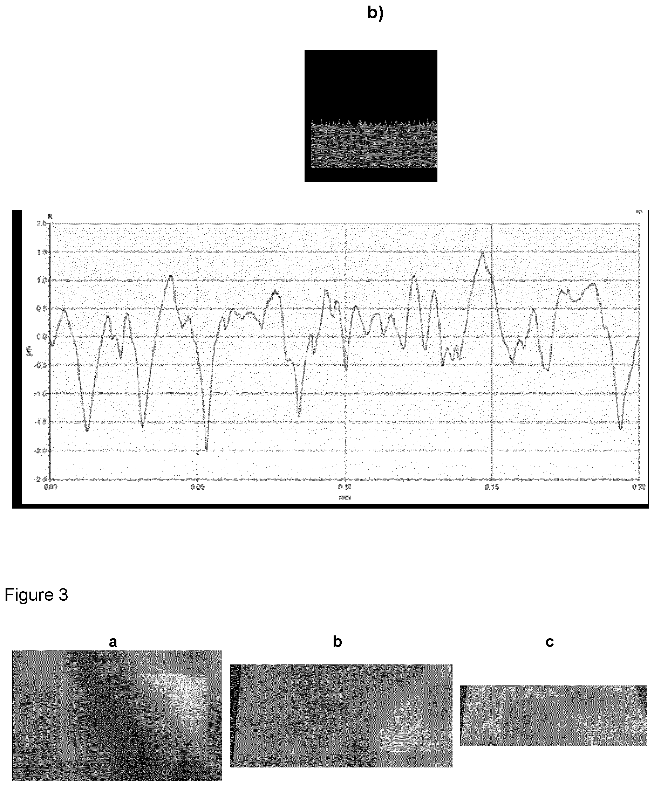

Figure 2 shows the height profiles of the surface of the upper layer of the composite shown in Figure 1. Thereby, in Figure 1a the height profile of the composite in the initial mode having an $R_a$ value of 0.02 $\mu$m (smooth surface) and in Figure 1b the height profile of the composite in the deformed mode having a $R_a$ value of 0.3 $\mu$m (rough surface) are shown. The drawings above of the height profiles in Figure 2a and 2b depicts schematically a non-scattering (indicated by arrows) even surface (Fig. 2a) and a scattering (indicated by arrows) rough surface (Fig. 2b).

Figure 3 shows photographs of the deformed composite of Figure 1 at various viewing angles. Figure 3a is made from a nearly perpendicular viewing angle with respect to the plane of the composite (~90°), Figure 3b is made from a viewing angle of ~60° with respect to the plane of the composite and Figure 3c is made from a viewing angle of ~30° with respect to the plane of the composite. Thereby, the composite exhibits an area which is deformed (matte grey/green, inner region) and an area which is non-deformed (red, outer region). The non-deformed area shows a viewing angle dependent slight color change from red (Fig. 3a) over orange (Fig. 3b) to yellow/green (Fig. 3c).

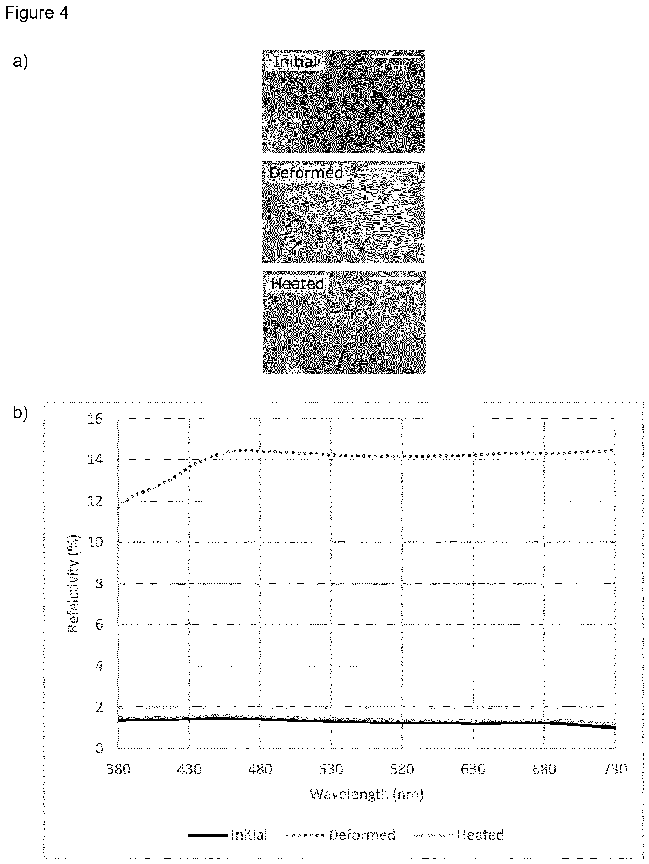

Figure 4 shows a composite according to the invention, wherein in Figure 4a optical micrographs of the composite are shown. The micrographs show the composite

- in an initial mode (initial), in which the upper layer has an even and uniform surface
- in a deformed mode (deformed), in which the upper layer has a rough surface, and
- in an after heating mode (heated), in which the upper layer has an even and uniform surface again after exceeding the $T_{g,SMP}$.

The shown composite comprises transparent CLC polymeric material in the upper layer so that the composite shows a transparency in the initial mode and an opaqueness in the deformed mode. Further Figure 4b shows the reflection bands of the composite in the different modes, in which can be seen that after deformation the reflection bands has an increased reflection across all wavelengths (deformed) in view of the reflection in the initial mode (initial) and after heating mode (heated). This increase of reflection across all wavelengths indicates the scattering of the rough surface.

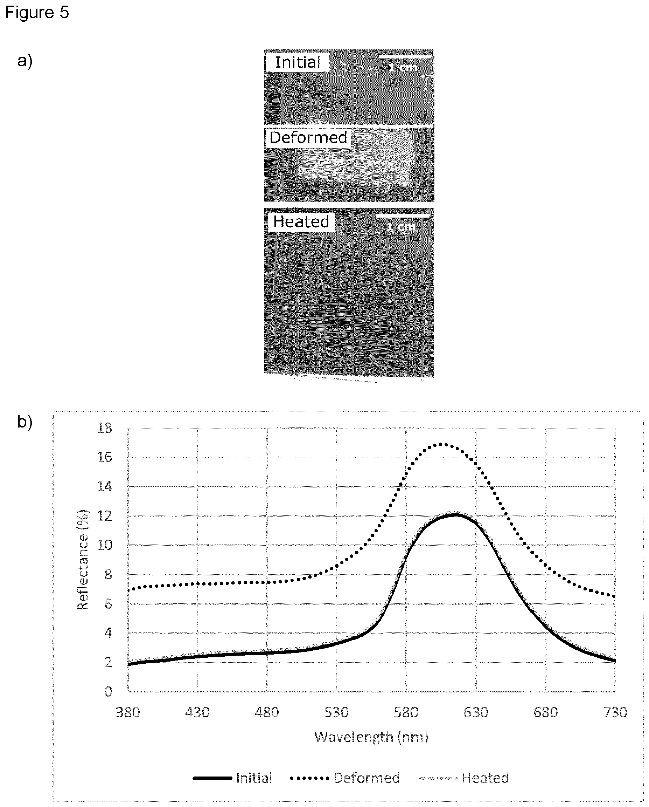

Figure 5 shows a composite according to the invention, wherein in Figure 5a optical micrographs of the composite are shown. The micrographs show the composite

- in an initial mode (initial), in which the upper layer has an even and uniform surface,
- in a deformed mode (deformed), in which the upper layer has a rough surface, and
- in an after heating mode (heated), in which the upper layer has an even and uniform surface again.

The shown composite does not comprise CLC polymeric material in the upper layer so that the upper layer is transparent and the red color of the substrate layer becomes visible in the initial mode of the composite. In the deformed mode the composite exhibits an opaqueness. Further Figure 4b shows the reflection bands of the composite in the different modes, in which can be seen that after deformation (deformed) the reflection band comprises also an peak at the same region as in the initial mode (initial), but the reflection is increased across all wavelengths, which indicates the scattering of light at the rough surface.

Figure 6

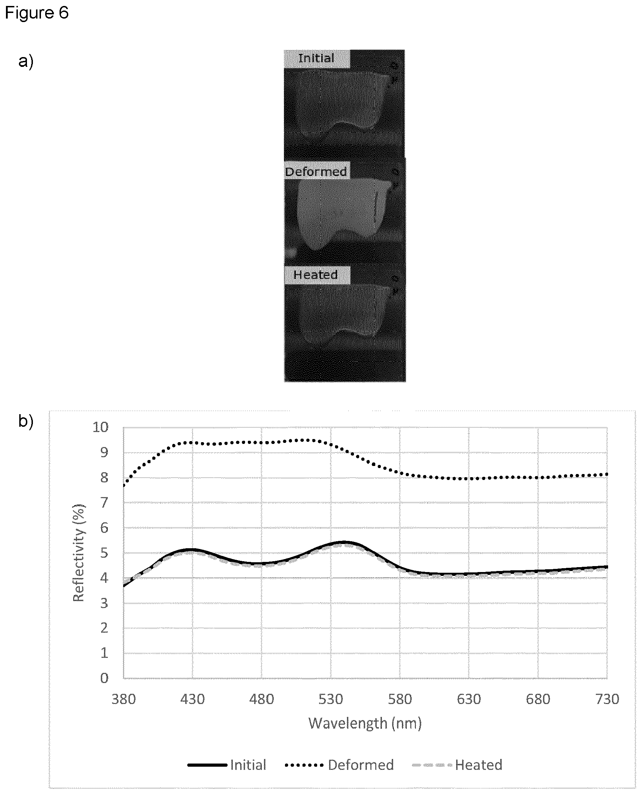

Figure 6 shows a composite according to the invention, wherein in Figure 6a optical micrographs of the composite are shown. The micrographs show the composite

- in an initial mode (initial), in which the upper layer has an even and uniform surface, and
- in a deformed mode (deformed), in which the upper layer has a rough surface.

The shown composite comprises CLC polymeric material in the upper layer so that the blue/grey color of the CLC-particles becomes visible in the initial mode of the composite. In the deformed mode the composite exhibits an opaqueness. Further Figure 6b shows the reflection bands of the composite in the different modes, in which can be seen that after deformation (deformed) the reflection band comprises also a peak at the same region as in the initial mode (initial), but the reflection is increased across all wavelengths and the reflection band is flattened. The increase of reflection across all wavelengths indicates the scattering of light at the rough surface.

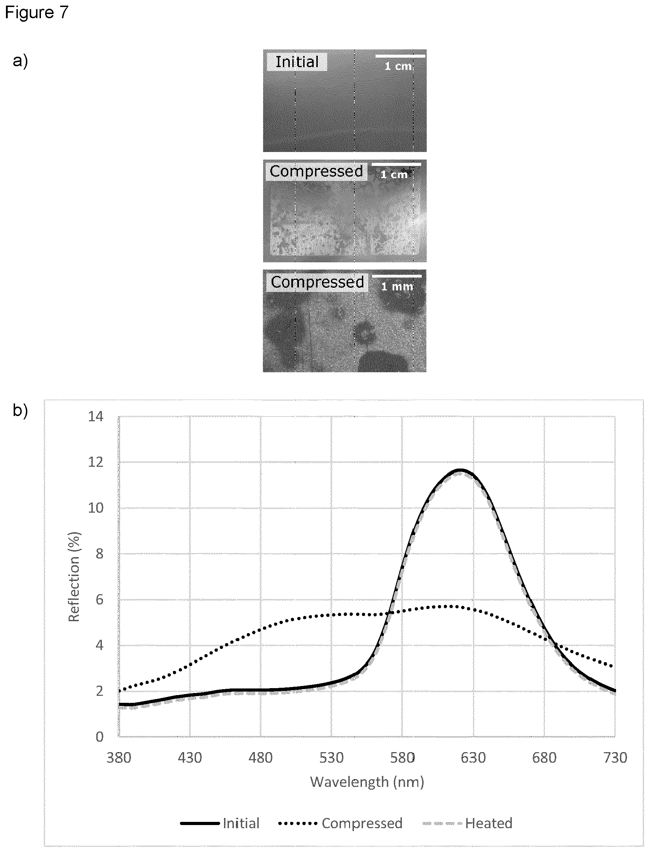

Figure 7 shows a comparative composite, wherein in Figure 7a optical micrographs of the composite are shown. The micrographs show the composite in an initial mode (initial), in which the upper layer has an even and uniform surface of ca. 2.5 $\mu$m thickness, and in compressed mode (compressed), in which the upper layer has a compressed surface. The shown composite comprises CLC polymeric material so that the composite shows in the initial mode a red color. In the compressed mode (compressed) the composite exhibits inhomogeneous color across its dimensions; including areas of a partial color change, and areas where the red color from the initial mode is dominating. In the zoomed micrograph of the compressed mode can be seen that there are spots of intense green color, which belong to particle contamination (e.g. dust). The contamination can also be a reason for the partial color change. Further, Figure 7b shows the reflection bands of the composite in the different modes, in which can be seen that after compression (compressed) the peak of the initial mode is reduced but not disappeared. In addition, a second blue shifted peak appears ($\sim$ 520 nm), which indicates the two appearing colors, as shown in the micrograph (compressed). But, the reflection is not increased or flattened across all wavelengths, thus, scattering is not exhibited in the composite in the compressed mode (compressed).

**Working Examples:**

**Example 1 (E1)**

A composite comprising an upper layer made of CLC polymeric material (red color) and a black flexible polyethylene terephthalate (PET) substrate layer, wherein the upper layer has a thickness of approx. 2.5 $\mu$m measured according to profilometry, was manufactured by depositing a CLC ink on a black flexible polyethylene terephthalate (PET) substrate layer using flexographic printing (IGT Printability Tester F1 from IGT Testing System Pte Ltd.), and subsequently cured using UV-irradiation. The glass transition temperature ($T_g$) of the upper layer was determined by differential scanning calorimetry (DSC) to be approx. 15-30 °C, with a mid-point at 18.4°C. The layer was subsequently deformed above its $T_g$ (35 °C, 30 s, 6 bar) using a hot-embossing stamp (KBA-Metronic GmbH). In the experimental setup, the surface of the upper layer was in direct contact with a roughly structured rubber ($R_a \approx 1$ $\mu$m), and the upper layer was quickly cooled to room temperature upon removal of the stamp. Since room temperature falls within the $T_g$ range, the upper layer will slowly revert back to its undeformed mode under ambient conditions.

The optical micrographs of Figure 1a and reflectivity spectra (obtained using i1 Pro from X-Rite inc.) of Figure 1b shows the composite prior to and after deformation. The upper layer exhibits a homogenous red reflection which is marked by a reflection band centered at 620 nm. Upon deformation, the upper layer appears matte and grey. Closer inspection using an optical microscope (Leica M80) (Figure 1a, bottom), indicates that the macroscopically uniform deformed upper layer consists of numerous small domains which vary in color. Remarkably, the presence of a particle (center of the image) had no effect on the deformation. The deformation of the upper layer is further marked by a distinct change in reflectivity yielding the optical contrast. First, a decreased reflection is observed at 620 nm which indicates the loss of CLC order upon deformation. Second, a flattening of the reflection band is observed across all wavelengths which is indicative of increased (surface) scattering.

Profilometry experiments performed on the upper layer of the composite prior to and after deformation reveal the transformation of a smooth surface (Ra = 0.02 $\mu$m; Figure 2a) to a roughly structured surface (Ra = 0.3 $\mu$m; Figure 2b), which identifies surface roughness as a source of scattering. After heating, the surface deformation is reversed completely, and the layer returns to its initial red color.

Further, it is observed that the typical angle-dependent reflection for planar aligned CLC polymeric material is significantly reduced by the deformation-induced scattering (Figure 3 a - c). Interestingly this effect serves as additional optical contrast between initial and deformed modes (matte grey vs. reflective with strong angular dependency).

## Example 2 (E2)

A composite as in E1 was used except that the CLC polymeric material and the polyethylene terephthalate (PET) substrate layer are transparent.

As shown in Figure 4, the resulting composite is transparent. According to colorimetry, the reflectivity across all visible wavelengths is < 2%. After deformation (as per E1), the reflectivity increased significantly across all wavelengths, which appeared as increased scattering leading to a largely opaque upper layer. After heating, the deformed upper layer returned completely to its initial non-scattering transparent mode. This mode of operation can be used to reveal an image, text, or background color.

## Example 3

A composite comprising a transparent shape-memory polymeric material as an upper layer and a clean glass slide as a sheet of a substrate layer and a red-reflecting CLC polymeric material as a further sheet of the substrate layer was manufactured by coating a clean glass slide with a commercially available monoacrylate (DSM), crosslinker, and photoinitiator, and subsequently cured with UV-radiation. The $T_{g,SMP}$ of the upper layer was determined to be approximately 30 °C. The glass slide containing the acrylic coating was subsequently placed on top of the red-reflecting CLC polymeric material used in E1 as an upper layer. Prior to deformation, the reflection spectrum of the transparent acrylic coating with the background of the CLC polymeric material (Fig. 5b) is identical to the reflection spectrum of the initial non-deformed upper layer of the composite of E1 (Fig. 1b). The upper layer was subsequently deformed using identical conditions as in E1 and E2, resulting in a partially opaque appearance. Characterization by colorimetry revealed that the reflection band centered at 620 nm, stemming from the underlying sheet of CLC polymeric material, remained completely intact. This indicates that the CLC order is completely maintained, in contrast to E1. However, the reflection band is shifted evenly upward across all wavelengths, which indicates that increased surface scattering is in this case the only source of the optical contrast between initial (Ra = 0.03 $\mu$m) and deformed modes (Ra = 0.4 $\mu$m). After heating, the upper layer returned completely to a transparent non-scattering mode.

## Example 4

A composite comprising an upper layer as in E3 and a glass substrate layer, wherein in the upper layer additionally CLC particles are comprised, was manufactured by coating a clean glass slide with the acrylic coating precursors from E3 and additionally, a small amount of a CLC particle mixture (according to WO 2015/120950 A1). The CLC particle mixture consisted of green- and blue-reflecting CLC polymer particles, with a $T_g$ of approximately 60-70 °C. After coating, the precursors were cured with UV-radiation to result in a particulate upper layer consisting of the CLC particle mixture embedded in the acrylic binder. To prevent scattering (prior to deformation), it was ensured that the refractive index of the CLC particles and acrylic binder were matching ($n \sim 1.5$). The substrate layer containing the upper layer was subsequently placed on top of a black PET background, to reveal a blue tint (Fig. 6a).

Prior to deformation, the reflection spectrum of the acrylic coating with CLC particles showed two weak reflection bands, centered at 540 nm and 420 nm, corresponding to the green- and blue-reflecting CLC particles, respectively (Fig. 6b). The particulate coating was subsequently deformed using identical conditions as E1-3, resulting in a partially opaque appearance. It is important to note that the temperature at which the deformation is performed is below the $T_g$ of the CLC particles. In this example therefore, only the $T_{g,SMP}$ of the acrylic binder in the upper layer is important for achieving optical contrast.

Colorimetry measurements revealed that the reflection bands broadened slightly, which may be an effect of increased scattering events. At the same time, the reflection band is shifted evenly upward across all wavelengths, indicative of increased surface scattering. After heating, the upper layer returned completely to a transparent non-scattering mode. The advantage of the "particulate upper layer" approach is that optical contrast can be achieved using a single layer, while the thermomechanical (binder) and optical properties (CLC particles) are decoupled. It is important to note that in principle any dye can be used to generate color within the binder.

## Comparative Example 1 (CE1)

In order to illustrate the advantage of the deformation of the surface of the upper layer of the composite, the effect of compressing the upper layer using a rigid and smooth/uniform (Ra < 0.02 $\mu$m) brass surface in an otherwise identical experimental setup to E1 is also investigated. In this case, a non-uniform color shift across the composite dimensions after compression is observable (Figure 7a). Overall a gradient color shift is observed across the composite, which indicates insufficient alignment of the stamp used in the compression. However, since the experimental setup was otherwise unchanged, this finding illustrates that the requirements for achieving a uniform color shift are much more stringent and hence more difficult to achieve in practice. The reflection band obtained in the 'green' area of the compressed sample appears bimodal (Figure 7b); with one peak unchanged to its initial position (~620 nm), and one peak significantly blue-shifted (~520 nm). Scattering at non-reflective wavelengths is hardly increased, in contrast to the previous approach. Closer inspection using a microscope reveals that the bimodal reflection spectrum is caused by the existence of a green-reflecting area speckled by red-reflecting domains which have microscopic particles or print imperfections at their center. From this it is deducible that the small height differences caused by these imperfections are prohibitive for the compression of their surrounding area in this approach.

**Claims**

1. A composite comprising an upper layer and a substrate layer, wherein the upper layer comprises a shape-memory polymeric material having a glass transition temperature $T_{g,SMP}$ and being at least partially transparent for light in the VIS-range, **characterized in that** the upper layer comprises a surface, wherein the surface is at least partially a rough surface having an arithmetic average roughness $R_a$ of at least 0.1 $\mu$m.

2. The composite according to claim 1, **characterized in that** the arithmetic average roughness $R_a$ is at least 0.2 $\mu$m, more preferably at least 0.4 $\mu$m.

3. The composite according to claim 1 or 2, **characterized in that** the upper layer has a thickness of at most 20.0 $\mu$m, preferably of at most 10.0 $\mu$m, more preferably of at most 6.0 $\mu$m, even more preferably of at most 4.0 $\mu$m, and most preferably of at most 2.5 $\mu$m.

4. The composite according to any of the preceding claims, **characterized in that** the $T_{g,SMP}$ is below 70 °C, preferably below 50 °C, more preferably below 30 °C, and most preferably below 20 °C.

5. The composite according to any of the preceding claims, **characterized in that** the $T_{g,SMP}$ can be lowered by humidity and water, irradiation, organic vapors, amines, metal ions, pH-values, and chemical gases such as ammonia, carbon dioxide, carbon monoxide nitrogen dioxide, nitrogen monoxide, and oxygen.

6. The composite according to any of the preceding claims, **characterized in that** the substrate layer comprises a laminate of at least two sheets.

7. The composite according to claim 6, **characterized in that** at least one of the sheets of the substrate layer is selected from the group comprising a glass sheet, a polymeric material sheet, a paper and/or paperboard sheet, a metal sheet, a mineral sheet, and a sheet made of ink.

8. The composite according to claim 6 or 7, **characterized in that** the upper layer and/or at least one of the sheets of the substrate layer comprises a CLC polymeric material.

9. The composite material according to claim 8, **characterized in that** the CLC polymeric material is arranged in a layer and/or a sheet comprising a polymeric material.

10. The composite according to claim 9, **characterized in that** the CLC polymeric material and the polymeric material of the upper layer and/or of a sheet of the substrate layer are an interpenetrating polymeric network.

11. The composite according to claim 9, **characterized in that** the CLC polymeric material are CLC particles.

12. The composite according to claim 9, **characterized in that** the CLC polymeric material is arranged as an array of mutually non-touching array elements.

13. The composite according to any of the claims 6 to 11, **characterized in that** at least one sheet of the substrate layer is transparent and/or has any possible color including white and black, preferably the color is black.

14. A method of manufacturing a composite comprising the following steps:

   a. providing an upper layer onto a substrate layer, wherein the upper layer comprises a shape-memory polymeric material having a $T_{g,SMP}$ and being at least partially transparent for light in the VIS-range,
   b. heating the composite above the $T_{g,SMP}$,
   c. compressing the upper layer with a stamp having a rough surface,
   d. cooling down the composite under the $T_{g,SMP}$,
   e. removing the stamp to provide an upper layer comprising a rough surface having an arithmetic average roughness $R_a$ of at least 0.1 $\mu$m.

15. Use of the composite according to claims 1 to 12 as an optical sensor on substrates comprising food, medicine, chemicals, and/or any other temperature sensitive perishable goods.

Figure 1

a)

b)

Figure 2

**a)**

**b)**

Figure 3

a           b           c

Figure 4

a)

b)

Figure 5

a)

b)

Figure 6

a)

b)

Figure 7

a)

b)

Europäisches
Patentamt

European
Patent Office

Office européen
des brevets

## EUROPEAN SEARCH REPORT

Application Number

EP 20 15 4919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DYLAN J D DAVIES ET AL: "A Printable Optical Time-Temperature Integrator Based on Shape Memory in a Chiral Nematic Polymer Network", ADVANCED FUNCTIONAL MATERIALS, WILEY - V C H VERLAG GMBH & CO. KGAA, DE, vol. 23, no. 21, 6 June 2013 (2013-06-06), pages 2723-2727, XP001582968, ISSN: 1616-301X, DOI: 10.1002/ADFM.201202774 [retrieved on 2013-01-15] * abstract * * figures 1-6 * * paragraphs [0001] - [0004] * | 1-15 | INV. G01K3/04 G01K5/48 G01K11/16 |
| X | WO 2008/014142 A2 (3M INNOVATIVE PROPERTIES CO [US]) 31 January 2008 (2008-01-31) * abstract * * figures 1-11C * * paragraphs [0023] - [0073] * | 1,2,5,14 | |
| A | YIN FANG ET AL: "Reconfigurable photonic crystals enabled by pressure-responsive shape-memory polymers", NATURE COMMUNICATIONS, vol. 6, no. 1, 15 May 2015 (2015-05-15), page 7416, XP055466873, DOI: 10.1038/ncomms8416 * the whole document * | 1-15 | TECHNICAL FIELDS SEARCHED (IPC) G01K C09K B42D |
| A,P | WO 2019/093886 A1 (FRESHSTRIPS BV) 16 May 2019 (2019-05-16) * abstract * * figures 1A, 1B, 5A-13 * * page 11, line 3 - page 24, line 24 * | 1-15 | |

The present search report has been drawn up for all claims

| Place of search | Date of completion of the search | Examiner |
|---|---|---|
| The Hague | 19 June 2020 | Totò, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 4919

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2020

| Patent document cited in search report | Publication date | Patent family member(s) | | Publication date |
|---|---|---|---|---|
| WO 2008014142 A2 | 31-01-2008 | AR | 062128 A1 | 15-10-2008 |
| | | AU | 2007276932 A1 | 31-01-2008 |
| | | BR | PI0713815 A2 | 06-11-2012 |
| | | CA | 2657244 A1 | 31-01-2008 |
| | | CN | 102016655 A | 13-04-2011 |
| | | EP | 2047221 A2 | 15-04-2009 |
| | | JP | 2010503005 A | 28-01-2010 |
| | | KR | 20090033454 A | 03-04-2009 |
| | | MY | 148925 A | 14-06-2013 |
| | | NZ | 574598 A | 27-05-2011 |
| | | RU | 2009101453 A | 10-09-2010 |
| | | TW | 200812825 A | 16-03-2008 |
| | | US | 2008024872 A1 | 31-01-2008 |
| | | WO | 2008014142 A2 | 31-01-2008 |
| WO 2019093886 A1 | 16-05-2019 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010084010 A
- WO 2018033595 A
- US 6671031 B
- NL 2018050741 W
- WO 2010084010 A1
- WO 2018033595 A1
- WO 2015120950 A1
- WO 2016128494 A
- WO 2016128493 A